(19) Europäisches Patentamt
European Patent Office
Office européen des brevets

(11) **EP 4 201 875 A1**

(12) **EUROPEAN PATENT APPLICATION**

(43) Date of publication:
**28.06.2023   Bulletin 2023/26**

(21) Application number: **21216272.1**

(22) Date of filing: **21.12.2021**

(51) International Patent Classification (IPC):
**C01B 3/04** (2006.01)      **C01B 3/50** (2006.01)

(52) Cooperative Patent Classification (CPC):
**C01B 3/047; C01B 3/50;** C01B 2203/043;
C01B 2203/0465

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **L'Air Liquide, Société Anonyme pour
l'Etude
et l'Exploitation des Procédés Georges Claude
75007 Paris (FR)**

(72) Inventors:
• **SCHMID-McGUINESS, Teja
60439 Frankfurt am Main (DE)**
• **ROSSI, Umberto
60439 Frankfurt am Main (DE)**
• **PONTZEN, Florian
60388 Frankfurt am Main (DE)**
• **SCHACK, Dominik
60388 Frankfurt am Main (DE)**

(74) Representative: **Air Liquide
L'Air Liquide S.A.
Direction de la Propriété Intellectuelle
75, Quai d'Orsay
75321 Paris Cedex 07 (FR)**

(54) **METHOD FOR CRACKING AMMONIA**

(57)      A method for producing hydrogen using a feed stream comprising ammonia is provided. The method can include the steps of: heating the feed stream in a first heat exchanger to produce a heated feed stream, wherein the heated feed stream is at a temperature above 500°C; introducing the heated feed stream into a first reaction zone under conditions effective for catalytically cracking the heated feed stream to produce a raw hydrogen stream, wherein the raw hydrogen stream comprises hydrogen and nitrogen; cooling the raw hydrogen stream by indirect heat exchange against a first cooling fluid to form a cooled hydrogen stream; and purifying the raw hydrogen stream to produce a hydrogen product stream and a tail gas, wherein the tail gas has a higher concentration of nitrogen as compared to the hydrogen product stream.

**FIG. 1**

**Description**

**Technical Field of the Invention**

The present invention relates to a method for hydrogen production using non-hydrocarbon feedstocks. More specifically, embodiments of the present invention are related to using ammonia as a feedstock to a hydrogen production facility in lieu of hydrocarbons, particularly natural gas.

**Background of the Invention**

In an effort to reduce the effects of carbon dioxide emissions, new energy carriers are becoming increasingly important. One of the leading energy carriers is hydrogen; however, due to its small molecular size, high pressure requirements, and very low boiling point, transportation of elemental hydrogen is difficult and costly.

Ammonia ($NH_3$) has raised some attention in the literature, since existing infrastructure can be used for storage and transportation (e.g., LPG infrastructure). As such, production of hydrogen using ammonia, instead of natural gas, is foreseen to play a major role in the future of hydrogen as a key molecule in the low carbon energy transition.

Various $NH_3$ cracking concepts have been proposed so far, often involving one or more of the following disadvantages:

- the cracking is conducted at low pressure, with the consequence that the hydrogen is obtained at low pressure. Hydrogen cannot, however, be compressed in centrifugal compressors, owing to its low molecular weight, and must instead be compressed in less efficient, less reliable and more costly piston-type or membrane-type compressors;
- most low-pressure processes have a limited scalability and therefore are not suitable for world scale hydrogen production. For large scale production (i.e., typically 200 tpd or 100,000 Nm3/h $H_2$), the ammonia consumption must be limited as far as possible;
- a recycle loop is required around the cracker, leading to extra equipment and costs; otherwise, the ammonia consumption is much higher than the theoretical minimum;
- it can be a challenge to devise an efficient heat integration scheme in which no steam is produced because, unlike the steam methane reforming process, where steam generation is an integral part of the overall heat integration and rapid cooling by water is required to protect the materials from metal dusting corrosion, ammonia cracking does not require any steam to be produced.

Therefore, it would be advantageous to provide a solution that can allow for efficient production of hydrogen from an ammonia feed gas without suffering from the aforementioned disadvantages.

**Summary of the Invention**

The present invention is directed to an apparatus and process that satisfies at least one of these needs. In certain embodiments of the invention, an ammonia feed gas can be cracked at a sufficiently high pressure such that no hydrogen compression means are required downstream of the ammonia cracker. In another embodiment, the ammonia to hydrogen conversion can be conducted without a recycle loop. In yet another embodiment, the process does not require use of a steam system for its heat integration.

A method for producing hydrogen using a feed stream comprising ammonia is provided. The method can include the steps of: heating the feed stream in a first heat exchanger to produce a heated feed stream, wherein the heated feed stream is at a temperature above 500°C; introducing the heated feed stream into a first reaction zone under conditions effective for catalytically cracking the heated feed stream to produce a raw hydrogen stream, wherein the raw hydrogen stream comprises hydrogen and nitrogen; cooling the raw hydrogen stream by indirect heat exchange against a first cooling fluid to form a cooled hydrogen stream; and purifying the raw hydrogen stream to produce a hydrogen product stream and a tail gas, wherein the tail gas has a higher concentration of nitrogen as compared to the hydrogen product stream.

In optional embodiments of the method of the invention:

- the first reaction zone comprises reaction tubes filled with catalyst, wherein the catalyst are preferably selected from the group consisting of nickel, cobalt, ruthenium, rhodium, and combinations thereof;
- the raw hydrogen stream is at a temperature of at least 550°C after leaving the first reaction zone;
- the feed stream is heated by indirect heat exchanger in the first heat exchanger against a second cooling fluid, wherein the second cooling fluid is the raw hydrogen stream;
- the conditions effective for catalytically cracking the heated feed stream comprise a pressure between 20 and 35 bar(a) and providing heat to the first reaction zone via combustion burners that are fed with a fuel in the presence of an oxidizer, wherein the fuel comprises ammonia;

- The method can also include the step of providing a second reaction zone in parallel with the first reaction zone, wherein the second reaction zone comprises a gas heated cracker that is heated by the flue gas;
- the second reaction zone is fed with a portion of the heated feed stream, wherein the portion is between 5% and 35% of the heated feed stream;
- the fuel has a lower heating value (LHV), wherein between 15-50% of the LHV is provided by ammonia, wherein between 50-85% of the LHV is provided by hydrogen;
- the tail gas, which is comprised of nitrogen, hydrogen, and unreacted ammonia, is fed with the fuel to the combustion burners, wherein a flue gas is produced by the combustion burners, the flue gas being substantially free of carbon dioxide, wherein the flue gas is preferably used to provide heating to a cold stream selected from the group consisting of the feed stream, the heated feed stream, water, the oxidizer, and combinations thereof;
- the raw hydrogen stream has a first hydrogen-component molar flow rate, and the hydrogen product stream has a second hydrogen-component molar flow rate, wherein a ratio of the second hydrogen-component molar flow rate to the first $H_2$-component molar flow rate ($\eta H_2$) is in the range of 0.70 to 0.90;
- the first cooling fluid is water and an export steam stream is produced by said indirect heat exchange during the step of cooling the raw hydrogen stream, wherein the export steam stream flow rate compared to the second flow rate is preferably below 0.25 kg steam/Nm$^3$ $H_2$;
- the heated feed stream is catalytically cracked in the presence of steam, wherein the steam is in an amount effective to reduce the formation of nitrides; and/or
- the $H_2$ product forms a first mass flow rate, and a sum of the ammonia streams used for the feedstock and fuel form a second mass flow rate, wherein a ratio of the first mass flow rate to the second mass flow rate is at least 0.132.

## Brief Description of the Drawings

These and other features, aspects, and advantages of the present invention will become better understood with regard to the following description, claims, and accompanying drawings. It is to be noted, however, that the drawings illustrate only several embodiments of the invention and are therefore not to be considered limiting of the invention's scope as it can admit to other equally effective embodiments.

FIG. 1 shows an embodiment of a hydrogen production facility using ammonia as the feedstock in accordance with an embodiment of the prior art.

FIG. 2 shows an embodiment of a hydrogen production facility using ammonia as the feedstock and fuel with improved heat integration in accordance with an embodiment of the present invention.

FIG. 3 shows another embodiment of a hydrogen production facility using ammonia as the feedstock and fuel where the heat integration is improved such that no steam system is required in accordance with an embodiment of the present invention.

FIG. 4 shows another embodiment of a hydrogen production facility using ammonia as the feedstock and fuel, in which a gas heated cracker is added in parallel to the main cracker, and where the heat integration is improved such that no steam system is required, in accordance with an embodiment of the present invention.

## Detailed Description

While the invention will be described in connection with several embodiments, it will be understood that it is not intended to limit the invention to those embodiments. On the contrary, it is intended to cover all the alternatives, modifications and equivalence as may be included within the spirit and scope of the invention defined by the appended claims.

In reference to the Figures, unless otherwise noted, dotted and dashed lines between two pieces of equipment are meant to indicate that the equipment is, at a minimum, thermally integrated.

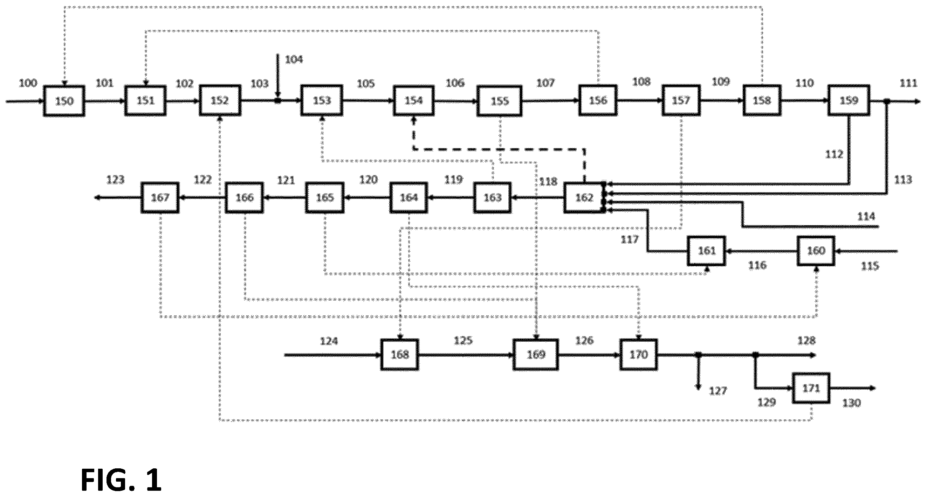

A reference case is provided, **Case 1a,** based on the cracking of $NH_3$ in an existing SMR at a cracking T of 600°C. This reference case is described in **Fig. 1.** The process $NH_3$ **100** is vaporized and pre-heated in successive heat exchangers **150, 151,** and **152.** As an option, a small amount of steam **104/127** can be mixed with the $NH_3$ (such that the steam preferably accounts for less than 1% mol of the mixture) to protect against the risk of formation of unwanted nitrides. The heated process $NH_3$ is then preferentially heated to a T in excess of 500°C in **153,** before being sent to the reactor **154,** where it is cracked in catalyst-filled tubes at an outlet cracking T of at least 550°C. The heat of the raw $H_2$

**106** is then successively used to vaporize water to produce steam in the process gas boiler **155/169,** to vaporize the $NH_3$ feedstock in **156/151,** to heat the boiler feed water in **157/168,** and for further vaporization of the $NH_3$ feedstock in **158/150.** The raw H2 stream **110** enters the PSA **159** at a T of ~ 40°C, from which an $H_2$ stream with high purity (preferably at least 99.9%) **111** is recovered.

The PSA off-gas **112,** which includes $N_2$, $H_2$, as well as unreacted $NH_3$ is sent to the burners of the reformer furnace **162,** where it is mixed and combusted with $NH_3$ fuel **114,** and hot combustion air **117.** In this case approximately 48% of the LHV is provided by $NH_3$ and approximately 52% by $H_2$. The combustion of this mixture is simple due to the sufficiently high flame speed. As an option, a portion of the $H_2$ product can be used as fuel **113** to offset part of the $NH_3$ fuel consumption. Part of the heat generated in the furnace is used in the endothermic cracking reaction in **154.** The remaining heat in the flue gas **118** is then successively used to heat the reformer feed in **163/153,** superheat steam in **164/170,** heat the combustion air in **165/161,** generate steam in the flue gas boiler **166/169,** and pre-heat the combustion air in **167/160.** In this cracker, we consider a common steam system for the process gas and flue gas. The boiler feed water **124** is pre-heated by raw $H_2$ in **168,** vaporized in the boiler **169** by the process gas **106** and flue gas **121,** and superheated in **170** by the flue gas **119.** Part of the steam production is sent to heat exchanger **171/152,** to vaporize and pre-heat the $NH_3$ feedstock further. The rest of the steam production is exported as a co-product **128.**

Alternatively, the optional $H_2$ flow rate used as fuel **113** could instead have been taken upstream of the PSA **159,** or the PSA could have been designed with a lower $H_2$ recovery, such that the required quantity of $H_2$ for fuel is contained in the PSA off-gas **112.** To account for the alternatives where the $H_2$ contribution to the fuel is provided upstream of the PSA, or through the PSA off-gas, we also include an "H2 fuel ratio" in Table 1, ηH2f, defined as follows:

$$\eta H2 = \frac{H2 \; mole \; flow \; rate \; product \; to \; customer \; (kmol\frac{H2}{h})}{H2 \; mole \; flow \; rate \; at \; cracker \; outlet \; (kmol\frac{H2}{h})} \quad (1)$$

$$\eta H2f = \frac{sum \; of \; all \; H2 \; mole \; flow \; rates \; to \; fuel \; (kmol\frac{H2}{h})}{H2 \; mole \; flow \; rate \; at \; cracker \; outlet \; (kmol\frac{H2}{h})} = 1 - \eta H2 \quad (2)$$

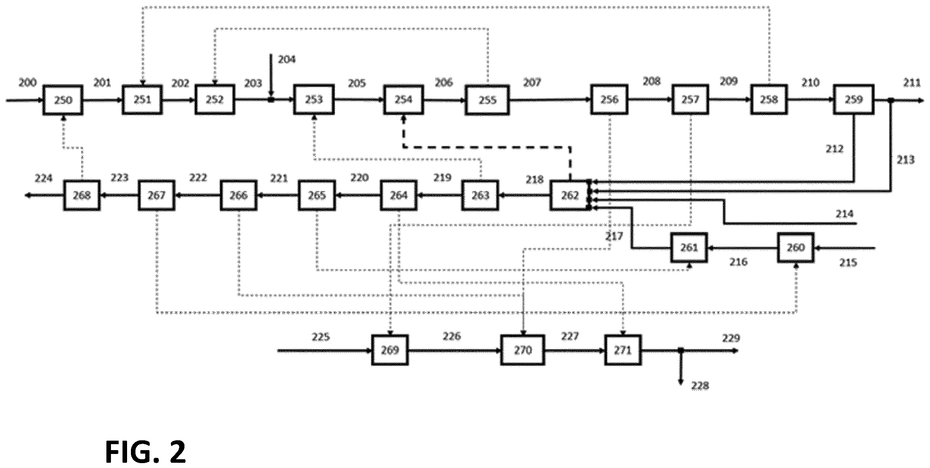

**Case 1b,** which is described in **Fig. 2,** is a greenfield $NH_3$ cracker in which the setup strays from the typical SMR heat integration. The refrigerated $NH_3$ feedstock **200** is vaporized/pre-heated in a series of 3 heat exchangers **250, 251,** and **252.** Here also, a small amount of steam **204/228** can be mixed with the $NH_3$ to protect against the risk of nitridation. The $NH_3$ feedstock **203** is then heated to a T in excess of 500°C, before being cracked in the reactor **254.** The heat integration is now different from the SMR setup described in Case 1a, with the heat of the reacted process gas **206** being used first to preheat the $NH_3$ feedstock **202** in **255/252,** and then to generate steam **227** in the process gas boiler **256/270.** The reverse is also possible, with generation of steam first, follow by pre-heating of the $NH_3$ feedstock. The raw $H_2$ **208** is then cooled in the boiler feed water pre-heater **257/269,** and it **209** is also further cooled in the feedstock vaporizer **258/251,** before being sent to the PSA **259,** from which we recover the pure $H_2$ stream **211,** and an optional pure $H_2$ stream **213** is routed to the burners of the furnace **262.** The PSA off-gas **212** is mixed with $NH_3$ fuel **214** and combustion air **215/216/217,** and combusted in the furnace. In this case, approximately 43% of the LHV is represented by $NH_3$ and approximately 57% by $H_2$. Part of the heat generated in the furnace is used to drive the cracking reaction in the catalyst filled tubes **254,** and the rest of the heat exchangers on the flue gas are arranged exactly as in the SMR in Case 1a, with the exception of the addition of the heat exchanger **268/250,** where the low grade heat available at the flue gas outlet is used to vaporize the $NH_3$ feedstock. Given the similar temperature levels of the raw $H_2$ **209** and flue gas **223,** the heat exchangers/$NH_3$ vaporizers **258/251** and **268/250** could be combined into a single piece of equipment.

Compared to **Case 1a,** the overall $NH_3$ consumption is decreased by 2.5% in **Case 1b,** and the steam export is reduced by 3.9 t/h (~ 14%).

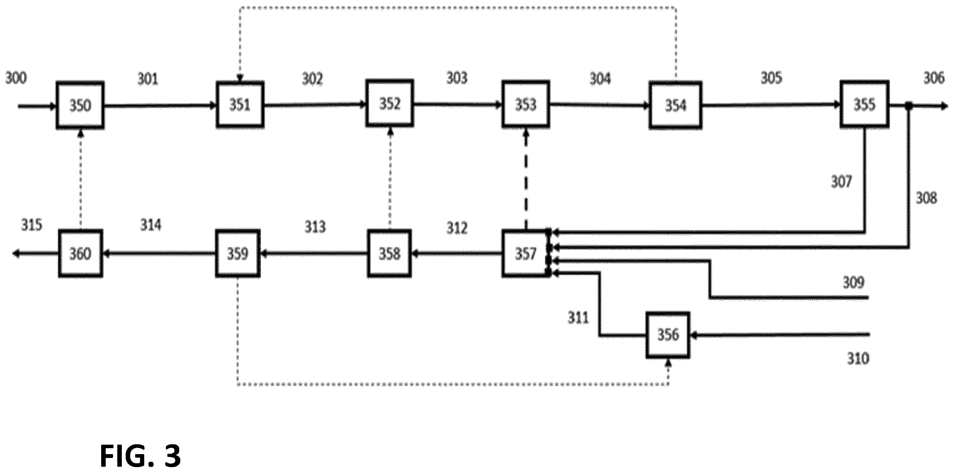

Assuming the $NH_3$ is produced in a carbon free or renewable way, it would be desirable to reduce the $NH_3$ consumption as much as possible. In **Case 1c,** an additional embodiment without a steam system is provided and illustrated in **Fig. 3.** The pre-heated process $NH_3$ **303** is cracked in the reactor **353.** With no steam system in place, the heat available in the cracked process gas **304** is used to vaporize and pre-heat the $NH_3$ feedstock **301** in a heat exchange system **351/354,** before being sent to the PSA **355.** A combination of PSA off-gas **307,** $NH_3$ fuel **309,** combustion air **310,** and optionally $H_2$ fuel **308** is burned in the furnace **357.** Approximately 29.5% of the LHV is represented by $NH_3$ and approximately 70.5% by $H_2$.

This $NH_3/H_2$ mixture simplifies combustion due to the sufficiently high flame speed. In addition, the lower $NH_3$ level can lead to lower NOx levels if the combustion temperature is controlled well. The hot flue gas **312** first heats the

$NH_3$ at the cracker inlet in heat exchanger **358/352,** then it **313** exchanges heat with the combustion air in heat exchanger system **359/356.** The residual low grade heat of the flue gas **314** is then used to vaporize the refrigerated $NH_3$ feedstock **300** in **360/350.** This configuration produces no steam, but reduces the overall $NH_3$ consumption by 7.6% compared to **Case 1a.** Beyond a temperature of 530°C on the hot combustion air **311,** a change in materials grade is required. In order to achieve an efficient heat integration in the setup of Case 1c, the combustion air has been heated to 670°C.

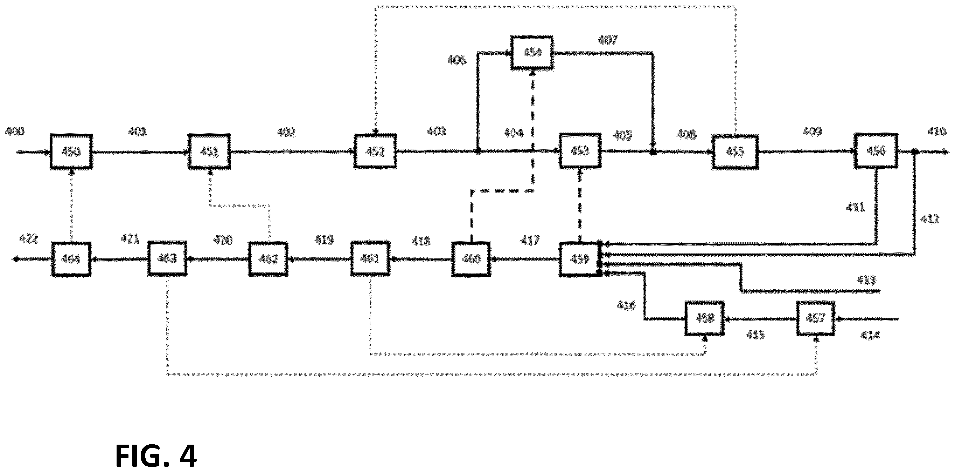

FIG. 4 provides a fourth embodiment, **Case Id,** in which a gas heated cracker **454** is added in parallel to the main cracker **453,** for which the heat is provided by the first heat exchanger **460** on the flue gas system downstream of the furnace **459.** An additional heat exchanger **462/451** is used to vaporize the $NH_3$ feedstock, between the two heat exchangers **461/458,** and **463/457,** which heat the combustion air. In contrast to **Case 1c,** the hot combustion air T has been reduced to a more manageable 530°C.

Another alternative embodiment involves a cracker in a bayonet tube configuration, in which the cracked gas exchanges heat counter-currently with the reacting gas. The setup would then look similar to the one described in FIG. 3.

Another alternative embodiment is proposed in Case 1e, where the same configuration as **Case 1c/Fig. 3** is used, but the cracking T is reduced to 550°C, and a portion of the pure $H_2$ stream downstream of the PSA is fed to the fuel system. In such a setup, a threshold T of 500°C at the cracker inlet can be reached, which is preferable to ensure the $NH_3$ cracking reaction takes place from the onset of the catalyst, and the hot combustion air T does not exceed the threshold of 530°C which might otherwise require a change in material grade. The advantage of this setup over Case 1d is that no gas heated cracker is required, and contrary to the alternative arrangement with a bayonet tube configuration which entails complications in the design of the cracker, a simple single pass tube design suffices in this case.

Table 1 below provides comparative data for the various embodiments described herein.

**Table 1**

|  | Case 1a NH3 cracking in an existing SMR T crack 600°C | Case 1b-NH3 cracker T crack 600°C - E-F7 on flue gas | Case 1c - NH3 cracker T crack 600°C - no steam system - E-F7 on flue gas | Case 1d - NH3 cracker + GHC T crack 600°C - no steam system - E-F7 on flue gas | Case 1e - NH3 cracker T crack 550°C - no steam system - E-F7 on flue gas |
|---|---|---|---|---|---|
| **Products / feedstock / fuel** |  |  |  |  |  |
| H2 prod (Nm3/h) | 100000 | 100000 | 100000 | 100000 | 100000 |
| Steam export (kg/h) | 28048 | 24189 | 0 | 0 | 0 |
| NH3 feed (kmol/h) | 3603 | 3603 | 3603 | 3590 | 3767 |
| NH3 fuel (kmol/h) | 456 | 356 | 148 | 159 | 0 |
| NH3 total (kmol/h) | 4059 | 3959 | 3751 | 3749 | 3767 |
| **Key process parameters** |  |  |  |  |  |
| T cracking (°C) | 600 | 600 | 600 | 600 | 550 |
| dT-cracker (Bridge-wall T - cracking T) | 150 | 150 | 150 | 150 | 150 |
| % of LHV from NH3 in fuel to furnace | 48.20% | 43.30% | 29.50% | 29.40% | 19.20% |

(continued)

| Key process parameters | | | | | |
|---|---|---|---|---|---|
| η H2f - as defined in (2) (in %) | 15.00% | 15.00% | 15.00% | 15.00% | 17.30% |
| Cracker inlet T (°C) | 550 | 500 | 550 | 420 | 500 |
| Hot combustion air T (°C) | 320 | 450 | 670 | 530 | 530 |
| kg H2 / kg NH3 (feed + fuel) | 0.129 | 0.132 | 0.140 | 0.140 | 0.139 |

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations that fall within the spirit and broad scope of the appended claims. The present invention may suitably comprise, consist or consist essentially of the elements disclosed and may be practiced in the absence of an element not disclosed. Furthermore, language referring to order, such as first and second, should be understood in an exemplary sense and not in a limiting sense. For example, it can be recognized by those skilled in the art that certain steps or devices can be combined into a single step/device.

The singular forms "a", "an", and "the" include plural referents, unless the context clearly dictates otherwise. The terms about/approximately a particular value include that particular value plus or minus 10%, unless the context clearly dictates otherwise.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

## Claims

1. A method for producing hydrogen using a feed stream comprising ammonia, the method comprising the steps of:

   heating the feed stream in a first heat exchanger to produce a heated feed stream, wherein the heated feed stream is at a temperature above 500°C;
   introducing the heated feed stream into a first reaction zone under conditions effective for catalytically cracking the heated feed stream to produce a raw hydrogen stream, wherein the raw hydrogen stream comprises hydrogen and nitrogen;
   cooling the raw hydrogen stream by indirect heat exchange against a first cooling fluid to form a cooled hydrogen stream; and
   purifying the raw hydrogen stream to produce a hydrogen product stream and a tail gas, wherein the tail gas has a higher concentration of nitrogen as compared to the hydrogen product stream.

2. The method as claimed in Claim 1, wherein the first reaction zone comprises reaction tubes filled with catalyst, wherein the catalyst are preferably selected from the group consisting of nickel, cobalt, ruthenium, rhodium, and combinations thereof.

3. The method as claimed in Claim 1, wherein the raw hydrogen stream is at a temperature of at least 550°C after leaving the first reaction zone.

4. The method as claimed in Claim 1, wherein the feed stream is heated by indirect heat exchange in the first heat exchanger against a second cooling fluid, wherein the second cooling fluid is the raw hydrogen stream.

5. The method as claimed in Claim 1, wherein the conditions effective for catalytically cracking the heated feed stream comprise a pressure between 20 and 35 bar(a) and providing heat to the first reaction zone via combustion burners that are fed with a fuel in the presence of an oxidizer, wherein the fuel comprises ammonia.

6. The method as claimed in Claim 5, further comprising providing a second reaction zone in parallel with the first reaction zone, wherein the second reaction zone comprises a gas heated cracker that is heated by the flue gas.

7. The method as claimed in Claim 6, wherein the second reaction zone is fed with a portion of the heated feed stream, wherein the portion is between 5% and 35% of the heated feed stream.

8. The method as claimed in Claim 5, wherein the fuel has a lower heating value (LHV), wherein between 15-50% of the LHV is provided by ammonia, wherein between 50-85% of the LHV is provided by hydrogen.

9. The method as claimed in Claim 5, wherein the tail gas, which is comprised of nitrogen, hydrogen, and unreacted ammonia, is fed with the fuel to the combustion burners, wherein a flue gas is produced by the combustion burners, the flue gas being substantially free of carbon dioxide, wherein the flue gas is preferably used to provide heating to a cold stream selected from the group consisting of the feed stream, the heated feed stream, water, the oxidizer, and combinations thereof.

10. The method as claimed in Claim 1, wherein the raw hydrogen stream has a first hydrogen-component molar flow rate, and the sum of the hydrogen-component molar flow rates to the fuel define a second hydrogen-component molar flow rate, wherein a ratio of the second hydrogen-component molar flow rate to the first $H_2$-component molar flow rate ($\eta$H2f) is in the range of 0.10-0.30.

11. The method as claimed in Claim 1, wherein the first cooling fluid is water and an export steam stream is produced by said indirect heat exchange during the step of cooling the raw hydrogen stream, wherein the export steam stream flow rate compared to the second flow rate is preferably below 0.25 kg steam/Nm$^3$ $H_2$.

12. The method as claimed in Claim 1, wherein the heated feed stream is catalytically cracked in the presence of steam, wherein the steam is in an amount effective to reduce the formation of nitrides.

13. The method as claimed in Claim 1, wherein the $H_2$ product forms a first mass flow rate, and a sum of the ammonia streams used for the feedstock and fuel form a second mass flow rate, wherein a ratio of the first mass flow rate to the second mass flow rate is at least 0.132.

**FIG. 1**

**FIG. 2**

**FIG. 3**

FIG. 4

Europäisches
Patentamt

European
Patent Office

Office européen
des brevets

# EUROPEAN SEARCH REPORT

Application Number

EP 21 21 6272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/203963 A1 (RAVIKUMAR RAVI [US] ET AL) 20 July 2017 (2017-07-20) | 1-5,9-13 | INV. C01B3/04 C01B3/50 |
| A | * paragraphs [0052], [0054], [0055], [0056], [0059], [0070], [0071] * * figure 1 * | 6-8 | |
| X | FR 1 469 045 A (AZOTE OFFICE NAT IND) 10 February 1967 (1967-02-10) | 1-3, 10-13 | |
| A | * example * * figure * | 4-9 | |
| X | US 2020/398240 A1 (JIANG LILONG [CN] ET AL) 24 December 2020 (2020-12-24) | 1-4, 10-13 | |
| A | * Embodiment 3 * * figures 1,2,4 * | 5-9 | |
| A | CN 113 451 615 A (QINGDAO CHUANGQI XINNENG CATALYTIC TECH CO LTD) 28 September 2021 (2021-09-28) * figure * | 1-13 | |
| A | US 3 198 604 A (PFEFFERLE WILLIAM C) 3 August 1965 (1965-08-03) * column 5, line 6 – line 75 * * column 6, line 53 – line 66 * * figure * | 1-13 | TECHNICAL FIELDS SEARCHED (IPC)  C01B |
| A | US 2003/232224 A1 (KORDESCH KARL [AT] ET AL) 18 December 2003 (2003-12-18) * paragraph [0031] – paragraph [0033] * * figure 1 * | 1-13 | |

The present search report has been drawn up for all claims

| Place of search | Date of completion of the search | Examiner |
|---|---|---|
| Munich | 24 May 2022 | Harf-Bapin, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                           
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 6272

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2022

| Patent document cited in search report | | Publication date | Patent family member(s) | | Publication date |
|---|---|---|---|---|---|
| US 2017203963 | A1 | 20-07-2017 | US 2017203963 A1 | | 20-07-2017 |
| | | | WO 2017127121 A1 | | 27-07-2017 |
| FR 1469045 | A | 10-02-1967 | NONE | | |
| US 2020398240 | A1 | 24-12-2020 | CN 110203882 A | | 06-09-2019 |
| | | | JP 6977082 B2 | | 08-12-2021 |
| | | | JP 2021001105 A | | 07-01-2021 |
| | | | US 2020398240 A1 | | 24-12-2020 |
| CN 113451615 | A | 28-09-2021 | NONE | | |
| US 3198604 | A | 03-08-1965 | NONE | | |
| US 2003232224 | A1 | 18-12-2003 | AU 8132901 A | | 05-02-2002 |
| | | | US 2003232224 A1 | | 18-12-2003 |
| | | | WO 0208117 A1 | | 31-01-2002 |

EPO FORM P0459

For more details about this annex : see Official Journal of the European Patent Office, No. 12/82